# EUROPEAN PATENT APPLICATION

(11) **EP 4 841 592 A1**
(43) Date of publication of application: **18.11.2026**
(21) Application number: 26178636.2
(22) Date of filing: 13.05.2026
(51) Int. Cl.: G06V 20/58, G06V 10/764, G06V 20/64

(54) **METHOD FOR PARKING VEHICLE, DEVICE, MEDIUM, AND PRODUCT**

(30) Priority: 16.05.2025 CN 202510642628
(71) Applicant: Volkswagen Aktiengesellschaft, 38440 Wolfsburg (DE)
(72) Inventor: Vock, Dominik Maximilian Martin, 38440 Wolfsburg (DE); Liesong, Martin, 38440 Wolfsburg (DE)

(57) **Abstract**

Embodiments of the present disclosure provide a method for parking a vehicle, a device, a medium, and a product. The method includes: detecting, by using a plurality of sensors at different positions on the vehicle, ground hazard information associated with the ground. The method further includes: on the basis of the detected ground hazard information, determining a parking location in a target parking area for the vehicle. In the method implemented in the present disclosure, parking in a ground area with a high risk or an unsuitable condition can be avoided, thereby reducing the risk of a passenger slipping or tripping, enhancing safety of the passenger, and improving the user experience of the passenger getting on and off the vehicle.

## Description

### TECHNICAL FIELD

The present disclosure relates to the field of vehicles, and more specifically, to a method for parking a vehicle, an electronic device, a medium, and a program product.

### BACKGROUND

With continuous progress of intelligent driving technologies, autonomous driving systems and driver-assistance systems have become major research focuses in the industry. The autonomous driving system can perform analysis and decision making based on sensing information for a surrounding environment, and automatically perform a corresponding driving operation, so that a vehicle can autonomously travel without manual intervention. Autonomous driving technologies can improve road traffic safety while improving overall transportation efficiency and alleviating road congestion.

With popularization of autonomous vehicles in daily activities, to ensure safety and comfort of passengers, in a process of performing automated parking and passenger entry and exit operations, the autonomous vehicle needs to consider vehicle parking feasibility and safety and convenience in an environment in which a passenger enters or exits the vehicle, so that the passenger can enter or exit the vehicle safely and conveniently.

### SUMMARY

Embodiments of the present disclosure provide a method for parking a vehicle, an electronic device, a medium, and a program product.

According to a first aspect of the present disclosure, a method for parking a vehicle is provided. The method comprises: detecting, by using a plurality of sensors at different positions on the vehicle, ground hazard information associated with the ground. The method further comprises: on the basis of the detected ground hazard information, determining a parking location in a target parking area for the vehicle.

According to a second aspect of the present disclosure, an electronic device for parking a vehicle is provided. The electronic device comprises: a processor; and a memory, coupled to the processor and having instructions stored therein, wherein the instructions, when executed by the processor, cause the device to perform the steps of the method for parking a vehicle according to the embodiments of the present disclosure.

According to a third aspect of the present disclosure, a computer-readable storage medium is provided, having computer-executable instructions stored thereon, wherein the computer-executable instructions, when executed, cause a computer to perform the steps of the method for parking a vehicle according to the embodiments of the present disclosure.

According to a fourth aspect of the present disclosure, a computer program product is provided. The computer program product is physically stored on a non-volatile computer-readable medium and comprises machine-executable instructions, wherein the machine-executable instructions, when executed, cause a machine to perform the steps of the method for parking a vehicle according to the embodiments of the present disclosure.

It should be noted that the summary of the present invention is provided to introduce some concepts in a simplified form, and these concepts will be further described in the following detailed description. The summary is not intended to identify key or essential features of the present disclosure, nor is it intended to limit the scope of the present disclosure.

### BRIEF DESCRIPTION OF THE DRAWINGS

The above and other objectives, features, and advantages of the present disclosure become more apparent from a more detailed description of the exemplary embodiments of the present disclosure with reference to the accompanying drawings, in which:
FIG. 1 is a schematic diagram of an exemplary environment in which a plurality of embodiments of the present disclosure can be implemented;
FIG. 2 is a flowchart of a method for parking a vehicle according to an embodiment of the present disclosure;
FIG. 3 is a schematic diagram of a process for parking a vehicle according to some embodiments in the embodiments of the present disclosure;
FIG. 4 is a schematic diagram of another process for parking a vehicle according to some embodiments in the embodiments of the present disclosure;
FIG. 5 is a flowchart of a process for parking a vehicle according to some embodiments in the embodiments of the present disclosure; and
FIG. 6 is a schematic block diagram of a device that can be configured to implement an embodiment of the present disclosure.

### DETAILED DESCRIPTION

Exemplary embodiments will now be described more fully with reference to the accompanying drawings. The exemplary embodiments, however, can be implemented in various forms and should not be construed as being limited to the embodiments set forth herein. Rather, these embodiments are provided to make the present application thorough and complete, and the concept of the exemplary embodiments is fully conveyed to those skilled in the art. Identical reference numerals in the figures denote identical or similar parts, and thus repeated descriptions thereof will be omitted.

In addition, the described features, structures, or characteristics may be combined in one or more embodiments in any suitable manner. In the following description, many specific details are provided to give a full understanding of the embodiments of the present application. However, those skilled in the art will appreciate that the technical solution of the present application may be practiced without one or more of the specific details, or other methods, components, devices, steps, etc. may be employed. In other cases, well-known methods, apparatuses, implementations, or operations are not shown or described in detail to avoid obscuring various aspects of the present application.

In the description of the embodiments of the present disclosure, the term "include" and its variants should be understood as open inclusion, that is, "include but not limited to". The term "on the basis of" should be understood as "at least partly on the basis of". The term "one embodiment" or "the embodiment" should be understood as "at least one embodiment". Although the terms first, second, third, etc. may be used herein to describe various components, these components should not be limited by these terms. These terms are used to distinguish one component from another. Thus, a first component to be discussed below can be referred to as a second component without departing from the teachings of the concept of the present application. As used herein, the term "and/or" and similar terms include any one, a plurality of, and all of the associated listed items in any combination.

The block diagrams shown in the figure section are merely functional entities and do not necessarily correspond to physically separate entities. That is, these functional entities may be implemented in a software form, or in one or more hardware modules or integrated circuits, or in different networks and/or processor apparatuses and/or microcontroller apparatuses.

The flowcharts shown in the accompanying drawings are merely exemplary illustrations, and do not necessarily include all the content and operations/steps, nor do they have to be performed in the described order. For example, some operations/steps may be further decomposed, and some operations/steps may be combined or partially combined. Accordingly, the actual execution order may be changed according to the actual situation.

As described above, current autonomous driving systems and driver-assistance systems still have some steps to be improved in terms of driver or passenger experience. When selecting a parking location, a current automated parking system considers only vehicle parking feasibility, control of a distance from a road boundary, and the like, but neglects an actual condition of the ground beneath a passenger during entry and exit. After a current autonomous vehicle completes parking, there may be a hazard area or an unsuitable area on a path of a passenger entering or exiting the vehicle, and this ground condition affects comfort of the passenger, and may also cause hazardous cases such as slipping and tripping of the passenger.

In view of this, the embodiments of the present disclosure propose a solution for parking a vehicle. In the embodiments of the present disclosure, ground hazard information associated with the ground may be first detected by using a plurality of sensors at different positions on the vehicle. These sensors may be mounted around the vehicle, for example, on the front, left, right, and rear sides of the vehicle. In addition, these sensors may be different types of sensors, such as a camera sensor, a lidar sensor, a thermal imaging sensor, or a polarization sensor. The ground hazard information may include, but is not limited to, a puddle, an ice surface, a trash heap, depressed ground, an excessively high curb, and the like.

According to some embodiments of the present disclosure, a parking location in a target parking area for the vehicle may further be determined based on the detected ground hazard information. For example, when the vehicle determines that a current parking location for a driver or a passenger is a location that is not suitable for the vehicle to park, such as a puddle, an ice surface, depressed ground, or an excessively high curb, the vehicle may select another suitable parking location for parking. In the method implemented in the present disclosure, parking in a ground area with a high risk or an unsuitable condition can be avoided, thereby reducing the risk of a passenger slipping or tripping, enhancing safety of the passenger, and improving the user experience of the passenger getting on and off the vehicle.

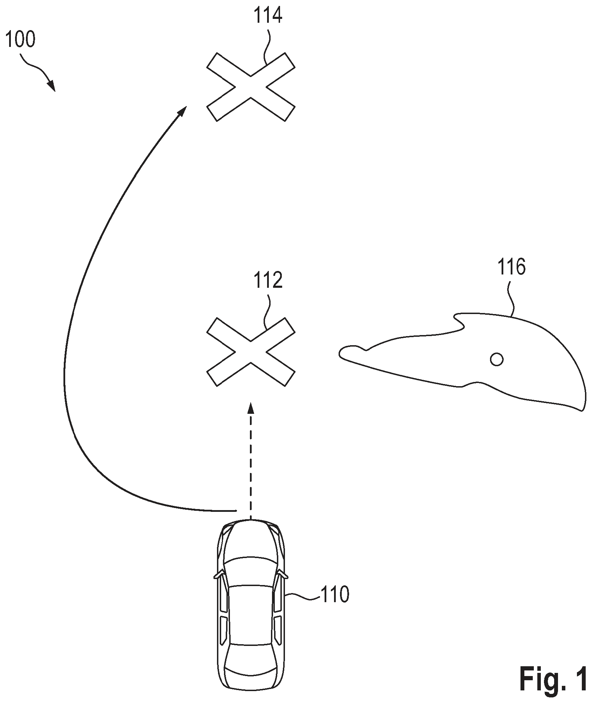

FIG. 1 is a schematic diagram of an exemplary environment 100 in which a plurality of embodiments of the present disclosure can be implemented. It should be understood that these exemplary embodiments are provided only to enable those skilled in the art to better understand and further implement the embodiments of the present disclosure, and are not intended to limit the scope of the present disclosure in any manner.

As shown in FIG. 1, the exemplary environment 100 may include an exemplary autonomous vehicle 110, a first target parking location 112, a second target parking location 114, a hazard area 116, and the like. For example, the autonomous vehicle 110 may approach a target parking area in a low-speed mode and perform an automated parking operation. According to this embodiment of the present disclosure, the autonomous vehicle 110 may have various sensor apparatuses, for example, including but not limited to a front camera, an area-view camera, a lidar sensor, a thermal imaging sensor, a polarization sensor, and another apparatus element. These sensors may be configured to collect state information of the ground in front of and around the vehicle.

According to some embodiments of the present disclosure, an initial preset parking location for the autonomous vehicle 110 may be the first target parking location 112. For example, the first target parking location 112 may be a default parking location planned according to a previous vehicle navigation path or a destination entered by a user. In some embodiments of the present disclosure, the first target parking location 112 may be near an edge of a lane, and may satisfy space, a safe distance, and the like that are required for vehicle parking.

According to some embodiments of the present disclosure, when the autonomous vehicle 110 is approaching the target parking area including the first target parking location 112, the autonomous vehicle 110 may enable a short-distance environment sensing mode, to collect more precise ground information of areas in front of and beside the autonomous vehicle 110. For example, according to some embodiments of the present disclosure, the autonomous vehicle 110 may enable a sensor device including a front camera, an area-view camera, a lidar sensor, and another apparatus element. In some embodiments, the lidar sensor may include radar applications such as a frequency-modulated continuous-wave (FMCW)-based lidar and/or a light-section-based lidar. In some embodiments of the present disclosure, for example, a collected area range may be 5 to 10 meters around the autonomous vehicle 110, to cover a potential path area in which the autonomous vehicle 110 is to park.

According to some embodiments of the present disclosure, the front camera and the area-view camera of the autonomous vehicle 110 may collect a ground image or video around the area. According to some embodiments of the present disclosure, the lidar sensor of the autonomous vehicle 110 may collect a three-dimensional (3D) structure or 3D information and a height change around the area, and construct a corresponding point cloud model. Additionally or alternatively, in some embodiments of the present disclosure, the thermal imaging sensor of the autonomous vehicle 110 may detect a thermal radiation feature in a temperature gradient change on the ground, to enhance identification of a ground state at night or in a low-contrast condition.

Additionally or alternatively, according to some embodiments of the present disclosure, the polarization sensor of the autonomous vehicle 110 may further determine reflectance information or a polarization feature of the ground to identify different ground surfaces, such as water, snow, ice, or oil. According to some embodiments of the present disclosure, an in-vehicle computer controller of the autonomous vehicle 110 may further model the ground information collected by the plurality of different sensors, thereby constructing a local ground model around the vehicle, and classifying states of ground units in the local ground model.

According to some embodiments of the present disclosure, the in-vehicle computer controller of the autonomous vehicle 110 may determine, based on the constructed local ground model, whether the first target parking location 112 is suitable for parking. For example, in some embodiments, the in-vehicle computer controller of the autonomous vehicle 110 may determine, by using the collected image information, whether the first target parking location 112 is waterlogged, stained, or snow-covered. For example, in some embodiments of the present disclosure, the in-vehicle computer controller of the autonomous vehicle 110 may determine, by using the constructed point cloud model, whether the first target parking location 112 has a terrain anomaly including a ground depression such as a pothole, a ground elevation such as a curb, and an abrupt slope change. Additionally or alternatively, in some embodiments of the present disclosure, the in-vehicle computer controller of the autonomous vehicle 110 may determine, by using determined ground reflectance, whether the first target parking location 112 is waterlogged or icy. For example, these areas may have low depths but high reflectance.

According to some embodiments of the present disclosure, the in-vehicle computer controller of the autonomous vehicle 110 may further determine whether a detected or identified hazard area overlaps an area corresponding to a door through which a driver or a passenger gets on and off the vehicle. In some embodiments, if the detected or identified hazard area is directly below a door opening area of the autonomous vehicle 110 or within a predetermined distance threshold from the door opening area, this location may be identified as a non-recommended parking location.

For example, in this embodiment of the present disclosure, the in-vehicle computer controller of the autonomous vehicle 110 may detect that the hazard area 116 such as a puddle exists at the right of the first target parking location 112 and the hazard area 116 is in a passenger door-opening area at the right of the first target parking location 112 for the vehicle. The in-vehicle computer controller of the autonomous vehicle 110 may identify the first target parking location 112 as a non-recommended parking location.

Then, the in-vehicle computer controller of the autonomous vehicle 110 may perform trajectory re-planning. For example, in some embodiments of the present disclosure, the in-vehicle computer controller of the autonomous vehicle 110 may perform hazard rating on each of identified ground hazard areas. The hazard rating may be set based on predetermination by a manufacturer or user preference. For example, in some embodiments of the present disclosure, the hazard rating may include, but is not limited to, one or more of the following: ground safety about whether there is no obstacle or no hazard area, ground comfort about whether ground is clean or has no water, stain, or trash, parking feasibility about whether there is an obstacle (such as another vehicle or a utility pole) ahead or to the side, compliance (that is, a selected parking location does not cross a line or is not in a no-parking area), a minimum distance of the user to a destination, and the like.

In an example, the in-vehicle computer controller of the autonomous vehicle 110 may determine a path from the first target parking location 112 to one or more other candidate parking locations, and select an area with a minimum hazard rating score as a new parking location, for example, the second target parking location 114. According to this embodiment of the present disclosure, for example, compared with the first target parking location 112, the second target parking location 114 avoids the hazard area 116, and meets requirements such as the parking feasibility, the safety, and the passenger comfort.

According to some embodiments of the present disclosure, the in-vehicle computer controller of the autonomous vehicle 110 may re-determine a traveling trajectory between a current location and the second target parking location 114, adjust directions and angles of front and rear wheels based on the determined traveling trajectory, and travel at a low speed. According to some embodiments of the present disclosure, when the autonomous vehicle 110 arrives at the second target parking location 114, one or more sensors of the autonomous vehicle 110 may again identify and confirm whether a current passenger door-opening area is still clean and/or safe. Additionally or alternatively, in some embodiments of the present disclosure, data associated with this path change and ground detection may be recorded by the in-vehicle computer controller of the autonomous vehicle 110 for further optimization of autonomous road trajectory planning and service improvement.

It should be understood that the above examples are not intended to be limiting, but are merely exemplarily provided for the purpose of helping understanding, and the embodiments of the present disclosure are not limited to the above examples.

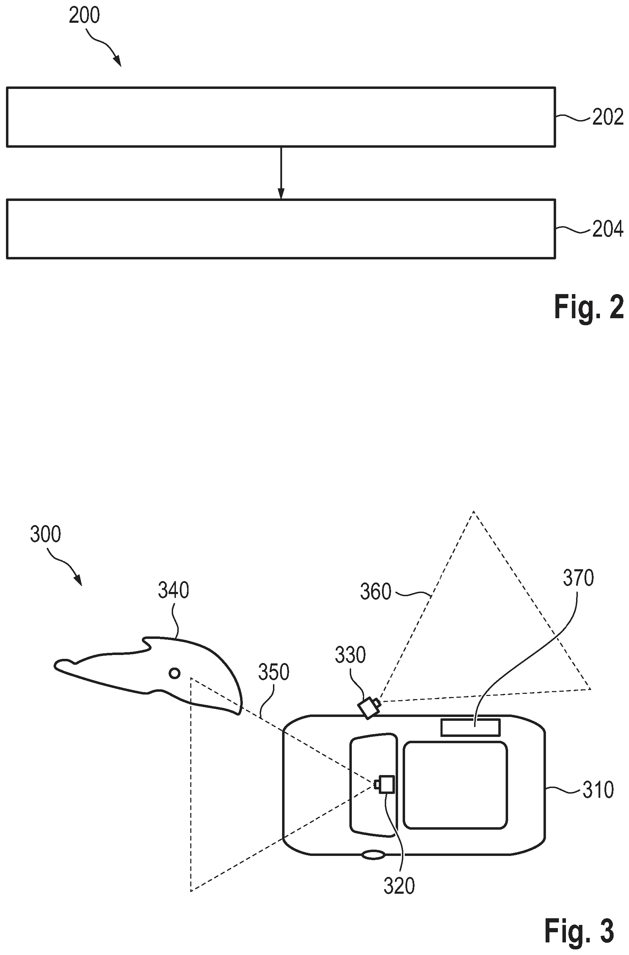

The schematic diagram of the exemplary environment 100 in which a method and/or process according to an embodiment of the present disclosure can be implemented has been described above with reference to FIG. 1. A flowchart of a method 200 for parking the vehicle 110 according to an embodiment of the present disclosure is described below with reference to FIG. 2.

As shown in FIG. 2, at block 202, ground hazard information associated with the ground is detected by using a plurality of sensors at different positions on the vehicle. According to some embodiments of the present disclosure, the plurality of sensors may include one or more front cameras mounted on the front of the vehicle, and one or more area-view cameras, a radar sensor, a lidar sensor, a thermal imaging sensor, a polarization sensor, an ultrasonic sensor, and the like that are mounted around the vehicle. In some embodiments, a high-resolution radar sensor can detect small raised obstacles such as a curb. According to some embodiments of the present disclosure, these sensors may be configured to scan and identify one or more hazard areas, such as a pothole, a puddle, a trash heap, snow, a road bump, or an ice surface, around a parking location in a target parking area in which the vehicle is currently to park.

At block 204, the parking location in the target parking area for the vehicle is determined based on the detected ground hazard information. According to some embodiments of the present disclosure, a parking location most suitable for a passenger to enter or exit the vehicle may be identified based on the determined ground hazard information. For example, one or more candidate parking locations may be selected in the current target parking area, and then hazard rating may be performed on the selected one or more candidate parking locations based on a parking condition. The parking condition may include: whether the hazard area can be avoided, comfort in the parking location, and the like. In this way, an area with a minimum hazard rating score may be selected as a location suitable for a user to park the vehicle.

In the method implemented in the present disclosure, the vehicle can be effectively prevented from parking in a ground area with a high risk, thereby reducing the possibility of a passenger falling, improving safety guarantee in a process of getting on and off the vehicle, and enhance riding comfort and user experience.

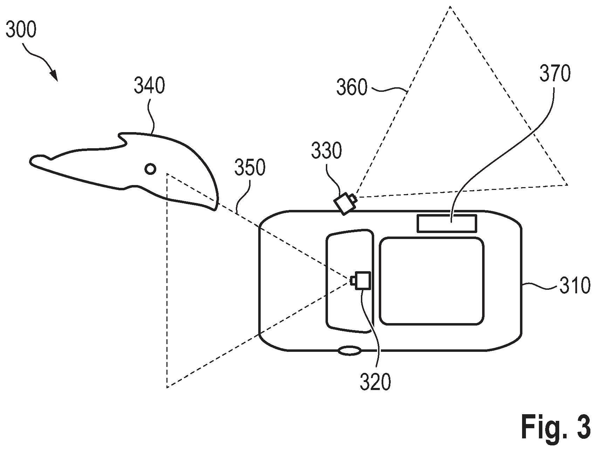

FIG. 3 is a schematic diagram of a process 300 for parking a vehicle according to some embodiments in the embodiments of the present disclosure. When the vehicle 310 enters a target area to park, the vehicle 310 may detect a ground area by using a plurality of sensors mounted around the vehicle, for example, a front camera sensor 320 and an area-view camera sensor 330 of the vehicle 310. In some embodiments of the present disclosure, the front camera sensor 320 and the area-view camera sensor 330 may provide images with a resolution of 720p or higher. In some embodiments of the present disclosure, the front camera sensor 320 and the area-view camera sensor 330 may provide video streams at a frame rate of 30 frames per second or higher. According to some embodiments of the present disclosure, the front camera sensor 320 may be configured to collect a road ground condition of a road area 350 in front of the vehicle 310.

According to some embodiments of the present disclosure, the area-view camera sensor 330 of the vehicle may be configured to collect, when the vehicle is decelerating or approaching the target parking area, a road ground condition of a road area 360 beside the vehicle and an area in which a driver or a passenger steps before entering or exiting the vehicle through a vehicle door 370. In some embodiments, the vehicle door 370 may include a front vehicle door, a rear vehicle door, and/or the like of the vehicle. This is not limited in the present disclosure.

According to some embodiments of the present disclosure, the images or videos provided by the front camera sensor 320 and the area-view camera sensor 330 may be transmitted to an image recognition model of the vehicle 310 to identify a potential ground hazard feature in ground image information that is related to a path of the passenger entering or exiting the vehicle. In some embodiments, the image recognition model may be a machine learning model based on a transformer, a region-based convolutional neural network model, or another architecture. This is not limited in the present disclosure. In some embodiments, the image recognition model may be trained to identify a specific ground hazard feature. For example, in some embodiments of the present disclosure, the image recognition model may identify a waterlogged area by learning a brightness feature and an edge perturbation of a water surface. In some embodiments of the present disclosure, the image recognition model may also identify, by learning a change in image brightness and a change in shadow projection and a geometric structure, a depressed or potholed area, a curb obstacle, or the like having a depth exceeding a predetermined threshold on the ground. In some embodiments, the ground hazard feature may further include an icy area, a trash-covered area, a snow-covered area, and the like.

Additionally or alternatively, in some embodiments, the image recognition model may perform confidence rating on the collected images. For example, a confidence that an identified area is a puddle area may be 89%, or a confidence that an identified area is a trash-covered area is 75%. In some embodiments, a potential ground hazard area may be identified as a determined ground hazard area when a confidence of the identified area exceeds a specific predetermined threshold (for example, 60%).

For example, after the front camera sensor 320 of the vehicle 310 collects a ground hazard area 340 suspected to be a puddle in front of the traveling vehicle, the front camera sensor 320 may transmit a collected image to the image recognition model of an in-vehicle computer controller inside the vehicle. According to some embodiments of the present disclosure, the image recognition model may then identify and analyze collected image data. The image recognition model may notify the in-vehicle computer controller when confirming that the probability of the ground hazard area 340 being a puddle exceeds a predetermined threshold (for example, 60%), and then the in-vehicle computer controller may generate a parking trajectory based on the identified ground hazard area 340 and a range of the target parking area, so that the vehicle can travel along the generated parking trajectory, avoid the ground hazard area 340, and finally park in a safe and comfortable location.

Additionally or alternatively, in some embodiments of the present disclosure, the sensors of the vehicle 310 may further include a lidar sensor, which may be mounted on the front, side, or top of the vehicle. In some embodiments, the lidar sensor may construct a 3D point cloud model for the ground by emitting a laser beam to the ground and measuring a round-trip time of the laser beam, to determine a point cloud height difference change or depth difference around the vehicle door 370, or the like.

In some embodiments of the present disclosure, the lidar sensor may detect a depth difference caused by a ground depression area, a ground elevation area, or a ground change, to determine a ground hazard feature. For example, when the depth difference exceeds a predetermined threshold (for example, 5 cm), it may be determined that there is a deep pit or a high curb bump around the vehicle door 370. In an example, the in-vehicle computer controller may then generate a parking trajectory based on the identified ground hazard feature, so that the vehicle can travel along the generated parking trajectory, avoid the ground hazard area 340, and finally park in a safe area.

Additionally or alternatively, in some embodiments of the present disclosure, the sensors of the vehicle 310 may further include a thermal imaging sensor, which may detect a thermal radiation feature in a temperature gradient change on the ground, to identify a ground hazard feature. For example, the thermal imaging sensor of the vehicle 310 may analyze a ground temperature distribution by using a local sliding window, and calculate a temperature gradient of a neighboring area.

In some embodiments, if a temperature in a specific area is significantly low, for example, lower than a temperature of surrounding ground by more than 3 °C, the area may be determined as an ice surface. In some embodiments, if thermal radiation features in some areas are low, these areas may be identified as puddles or muddy ground. According to some embodiments of the present disclosure, the thermal imaging sensor may be used in scenarios in which the camera sensors cannot be enabled, for example, used in a low light condition or at night. The in-vehicle computer controller may then generate a corresponding parking trajectory based on the thermal radiation feature to avoid the area and finally park the vehicle in a safe area. In some embodiments, the thermal imaging sensor may distinguish between a frozen hazardous road, a wet road surface, a dry road surface, and the like based on different temperatures.

Additionally or alternatively, in some embodiments of the present disclosure, the sensors of the vehicle 310 may further include a polarization sensor, which may detect a polarization change in ground reflection, and identify a ground hazard feature based on a polarization feature. For example, the polarization sensor may determine a polarization degree of a collected image pixel, and a higher polarization degree may indicate ground with stronger reflection, such as a puddle, a water surface, an ice surface, or an oil stain. In some embodiments, if the determined polarization degree is higher than a specific predetermined threshold, this area may be determined as a hazard area.

In some embodiments, the polarization sensor may further determine a road type based on texture changes of collected image pixels. For example, if directions of the texture changes are consistent and polarization degrees are high, it indicates that specular reflection of this area is obvious, and this area may be an ice surface or a water surface. In some embodiments, if directions of the texture changes are different and polarization degrees are low, it indicates that specular reflection of this area is low, and this area may be dry and rough ground.

In some embodiments, the in-vehicle computer controller of the vehicle 310 may further include a multimodal model, which may synthesize different types of data information from a plurality of different sensors to comprehensively evaluate or rate ground information. For example, in some embodiments, the multimodal model may adjust a confidence of data from the camera sensor to be higher during the day, and adjust a confidence of data from the lidar sensor or the thermal imaging sensor to be higher during the night.

In some embodiments, the in-vehicle computer controller of the vehicle 310 may further generate a set of candidate parking locations, such as a first candidate parking location, a second candidate parking location, ..., and an N^{th} candidate parking location, within the range of the target parking area based on the different types of data information collected by the plurality of different sensors. The in-vehicle computer controller may further calculate a hazard rating score for each candidate parking location in the set of candidate parking locations based on the foregoing safe parking condition, and select an area with a minimum hazard rating score as a final parking location. In this way, a current vehicle hardware device can be utilized to implement recognition of a detailed ground environment and responsive control without adding additional sensor costs, thereby finally improving parking experience of the user.

According to this embodiment of the present disclosure, the in-vehicle computer controller of the vehicle 310 may be deployed with an artificial intelligence (AI) application that is specifically trained based on an automated parking task. A parking process may be processed by the AI application. The AI application may be trained to automatically detect a potential ground hazard condition and dynamically plan and update a vehicle traveling or parking trajectory adaptively based on a detected real-time decision result, so that the vehicle travels at a low and smooth speed to a location that is determined by the AI application to be most suitable for the passenger to park the vehicle, and completes parking. The AI application can perform continuous online learning and wireless OTA update to adapt to different vehicle types and constantly changing road environments.

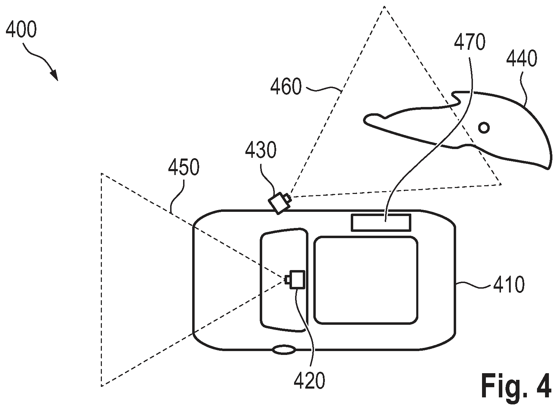

FIG. 4 is a schematic diagram of another process 400 for parking a vehicle according to some embodiments in the embodiments of the present disclosure. It should be understood that the vehicle 410 shown in FIG. 4 may include or have one or more apparatus components and assemblies that are the same as or corresponding to those of the vehicle 310 shown in FIG. 3, and the process 400 may include steps or processes that are the same as, corresponding to, more than, or fewer than those of the process 300. This is not limited in the present disclosure.

For example, according to some embodiments of the present disclosure, the vehicle 410 may include sensor assemblies such as a front camera sensor 420, an area-view camera sensor 430, a lidar sensor, a thermal imaging sensor, and a polarization sensor. In some embodiments of the present disclosure, the front camera sensor 420 and one or more other sensors of the vehicle 410 may be configured to detect a road area 450 of road ground in front of the vehicle 410.

In some embodiments of the present disclosure, the area-view camera sensor 430 and one or more other sensors may be configured to detect a road area 460 and the like of road ground beside the vehicle 410. According to some embodiments of the present disclosure, the area-view camera sensor 430 may alternatively be a surround-view camera with a wide-angle imaging capability, configured to cover a larger imaging range. According to this embodiment of the present disclosure, sensor data such as image data and laser point cloud data captured by the area-view camera sensor 430 and the one or more other sensors may be transmitted to a trained image recognition model or a multimodal model in an in-vehicle computer controller of the vehicle 410 for identification and analysis, to determine a ground hazard area such as a puddle, a snow drift, a mud puddle, or trash and a corresponding confidence.

In an embodiment, when detecting that the road area 460 detected by the area-view camera sensor 430 includes a road surface, for example, a puddle 440, that may cause a passenger to fall or trip after opening a vehicle door 470 or cause riding discomfort, the in-vehicle computer controller of the vehicle 410 may re-plan a parking trajectory, and perform adjustment along a traveling direction on a current path to determine a parking location that satisfies a ground condition for getting off the vehicle, for example, select a suitable location from a plurality of candidate locations within a range of a target parking area. In the method implemented in the present disclosure, optimization of hazard detection and parking can be implemented in an area for a driver or a passenger to get on and off the vehicle, and intelligent recognition of and dynamic response to a ground state of an entry/exit area for the driver or the passenger are implemented, ensuring that an area corresponding to the vehicle door 470 is clean and hazard-free.

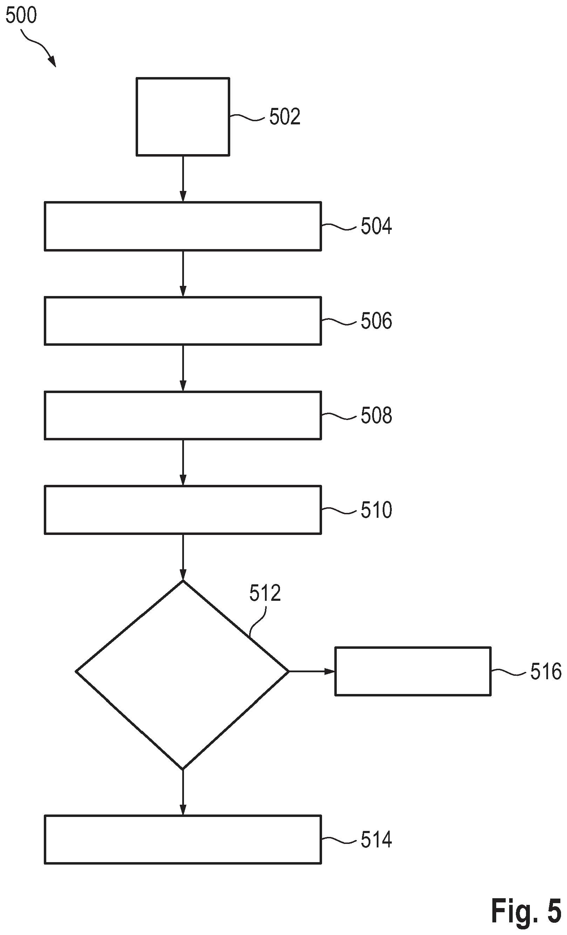

FIG. 5 is a flowchart of a process 500 for parking a vehicle according to some embodiments in the embodiments of the present disclosure. As shown in FIG. 5, the overall process may start at block 502. At block 504, the parking method implemented according to the present disclosure may be performed when it is detected that a traveling speed of a vehicle is slowing down and the vehicle is approaching a target parking area. At block 506, a plurality of sensors may be activated for data collection.

For example, according to some embodiments of the present disclosure, image data may be collected by using camera sensors including a front camera and a surrounding area-view camera. In some embodiments of the present disclosure, 3D point cloud scanning may be performed by using a lidar sensor. In some embodiments, a thermal radiation gradient on the ground may be detected by using a thermal imaging sensor, and a polarization feature on the ground may be detected by using a polarization sensor.

At block 508, the data may be processed to determine ground hazard information. For example, in some embodiments, the collected data may be fused, and then a ground hazard feature may be identified by using an image recognition model or through 3D point cloud height difference detection, thermal radiation gradient analysis, polarization feature analysis, and the like. For example, a waterlogged area, a depressed area with a depth exceeding a threshold, an icy or snow-covered area, a trash-covered area on the ground, and a curb area higher than a door sill of the vehicle are distinguished.

At block 510, hazard rating may be performed on these identified areas. For example, hazard ratings are determined based on prior knowledge, a user predetermined condition, and a preferred behavior habit. At block 512, it may be determined whether there is at least one area whose hazard rating score is less than a hazard rating score threshold in one or more of these rated areas. At block 514, if it is determined that there is at least one area whose hazard rating score is less than the hazard rating score threshold, the area may be determined as a desired safe parking area, a parking trajectory may be generated, and automated parking may be performed.

At block 516, if it is determined that there is no area whose hazard rating score is less than the hazard rating score threshold, a ground hazard processing assembly or apparatus of the vehicle may perform corresponding processing on the ground. For example, in some embodiments, partial drying processing may be performed on the waterlogged area or the snow-covered area by using a ground drying assembly at the bottom of the vehicle through, for example, hot air or infrared drying. In some embodiments, partial obstacle clearing processing may be performed on the trash-covered area or the snow-covered area on the ground by using, for example, a ground obstacle clearing machine at the bottom of the vehicle. Additionally or alternatively, in some embodiments, a vehicle door opening strategy, for example, a vehicle door angle or a vehicle door opening sequence, may be adjusted to avoid a ground obstacle.

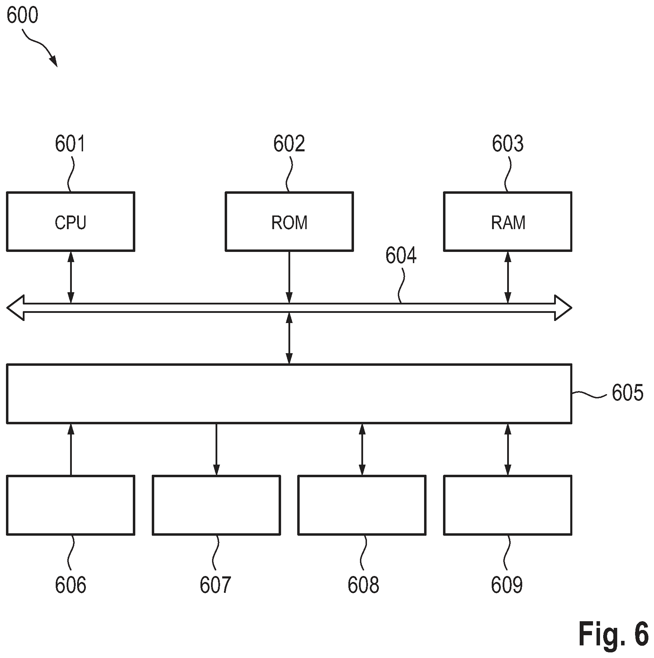

FIG. 6 is a schematic block diagram of a device 600 that can be configured to implement an embodiment of the present disclosure. The device 600 may be the device or apparatus described in the embodiments of the present disclosure. As shown in FIG. 6, the device 600 includes a central processing unit (CPU) 601, which may perform various appropriate actions and processing according to computer program instructions stored in a read-only memory (ROM) 602 or computer program instructions loaded from a storage unit 608 into a random access memory (RAM) 603. Various programs and data required for operations of the device 600 may also be stored in the RAM 603. The CPU 601, the ROM 602, and the RAM 603 are connected to each other via a bus 605. An input/output (I/O) interface 605 is also connected to the bus 604.

A plurality of components in the device 600 are connected to the I/O interface 605, including: an input unit 606, such as a keyboard and a mouse; an output unit 607, such as various types of displays and speakers; the storage unit 608, such as a magnetic disk and an optical disk; and a communication unit 609, such as a network interface card, a modem, and a wireless communication transceiver. The communication unit 609 allows the device 600 to exchange information/data with another device through a computer network such as the Internet and/or various telecommunication networks.

The various methods or processes described above may be performed by the processing unit 601. For example, in some embodiments, the method may be implemented as a computer software program that is physically included in a machine-readable medium, such as the storage unit 608. In some embodiments, a part of the computer program or the entire computer program may be loaded and/or installed onto the device 600 via the ROM 602 and/or the communication unit 609. When the computer program is loaded onto the RAM 603 and executed by the CPU 601, one or more steps or actions in the methods or processes described above may be performed.

In some embodiments, the methods and processes described above may be implemented as a computer program product. The computer program product may include a computer-readable storage medium, having computer-readable program instructions thereon for performing various aspects of the present disclosure.

The computer-readable storage medium may be a physical device that can retain and store instructions used by an instruction execution device. For example, the computer-readable storage medium may be, but is not limited to, an electrical storage device, a magnetic storage device, an optical storage device, an electromagnetic storage device, a semiconductor storage device, or any appropriate combination thereof. More specific examples (a non-exhaustive list) of the computer-readable storage medium include: a portable computer disk, a hard disk, a RAM, a ROM, an erasable programmable read-only memory (EPROM or flash memory), a static random access memory (SRAM), a portable compact disc read-only memory (CD-ROM), a digital versatile disc (DVD), a memory stick, a floppy disk, a mechanical encoding device such as a punch card having instructions stored thereon or a raised structure within a groove, and any appropriate combination thereof. The computer-readable storage medium used herein is not construed as a transient signal, such as a radio wave or other freely propagated electromagnetic waves, an electromagnetic wave propagated through a waveguide or other transmission media (for example, an optical pulse propagated through a fiber optic cable), or an electrical signal transmitted through a wire.

The computer-readable program instructions described herein may be downloaded from the computer-readable storage medium to various computing/processing devices, or downloaded to an external computer or external storage device through a network, such as the Internet, a local area network (LAN), a wide area network (WAN), and/or a wireless network. The network may include a copper transmission cable, optical fiber transmission, wireless transmission, a router, a firewall, a switch, a gateway computer, and/or an edge server. A network adapter card or network interface in each computing/processing device receives the computer-readable program instructions from the network, and forwards the computer-readable program instructions for storage in a computer-readable storage medium in the computing/processing device.

The computer program instructions for executing the operations in the present disclosure may be assembly instructions, instruction set architecture (ISA) instructions, machine instructions, machine-related instructions, microcode, firmware instructions, state setting data, or source code or object code written in any combination of one or a plurality of programming languages, wherein the programming languages include an object-oriented programming language and a conventional procedural programming language. The computer-readable program instructions may be wholly executed on a user computer, partially executed on the user computer, executed as a stand-alone software package, partially executed on the user computer and partially executed on a remote computer, or wholly executed on the remote computer or a server. In a case related to the remote computer, the remote computer may be connected to the user computer via any kind of network including a LAN or a WAN, or may be connected to an external computer (for example, through the Internet using an Internet service provider). In some embodiments, an electronic circuit, for example, a programmable logic circuit, a field-programmable gate array (FPGA), or a programmable logic array (PLA), is customized by using state information of the computer-readable program instructions, wherein the electronic circuit may execute the computer-readable program instructions, to implement various aspects of the present disclosure.

These computer-readable program instructions may be provided for a processing unit of a general-purpose computer, a special-purpose computer, or another programmable data processing apparatus, thereby producing a machine, so that these instructions, when executed by the processing unit of the computer or the another programmable data processing apparatus, produce an apparatus for implementing a function/an action specified in one or a plurality of blocks in the flowcharts and/or block diagrams. These computer-readable program instructions may alternatively be stored in the computer-readable storage medium, and these instructions cause a computer, a programmable data processing apparatus, and/or another device to operate in a specific manner, so that the computer-readable medium storing the instructions includes an article of manufacture including instructions for implementing various aspects of a function/an action specified in one or a plurality of blocks in the flowcharts and/or block diagrams.

The computer-readable program instructions may be loaded onto the computer, the another programmable data processing apparatus, or the another device, to cause a series of operational steps to be performed on the computer, the another programmable data processing apparatus, or the another device to produce a computer-implemented process, so that a function/an action specified in one or a plurality of blocks in the flowcharts and/or block diagrams is implemented by using the instructions executed on the computer, the another programmable data processing apparatus, or the another device.

The flowcharts and block diagrams in the accompanying drawings show implementable architectures, functions, and operations of the device, method, and computer program product according to a plurality of embodiments of the present disclosure. In this regard, each block in the flowcharts or block diagrams may represent a module, a program segment, or a part of instructions, wherein the module, the program segment, or the part of instructions includes one or a plurality of executable instructions for implementing a specified logical function. In some alternative implementations, the functions noted in the blocks may occur out of the order noted in the accompanying drawings. For example, two consecutive blocks may be actually executed substantially concurrently, or may sometimes be executed in a reverse order. This depends upon functions involved. It should also be noted that each block in the block diagrams and/or flowcharts and a combination of the blocks in the block diagrams and/or flowcharts may be implemented by a dedicated hardware-based system for performing a specified function or action, or may be implemented by a combination of dedicated hardware and computer instructions.

The embodiments of the present disclosure have been described above, and the above descriptions are exemplary and not exhaustive, and are not limited to the disclosed embodiments. Many modifications and variations are apparent to those of ordinary skill in the art without departing from the scope and spirit of the described embodiments. The selection of the terms herein aims to best explain principles and actual applications of the embodiments and technical improvements made in the embodiments to technologies in the market, or enable other persons of ordinary skill in the art to understand each embodiment disclosed herein.

## Claims

1. A method for parking a vehicle, comprising:
detecting, by using a plurality of sensors at different positions on the vehicle, ground hazard information associated with the ground; and
on the basis of the detected ground hazard information, determining a parking location in a target parking area for the vehicle.

2. The method according to claim 1, wherein the plurality of sensors of the vehicle comprise one or more of the following:
a camera sensor, a radar sensor, a lidar sensor, a thermal imaging sensor, or a polarization sensor.

3. The method according to claim 2, wherein the camera sensor comprises at least one front camera and one or more area-view cameras disposed around the vehicle; and
the camera sensor is configured to acquire, when the vehicle is decelerating or approaching the target parking area, ground image information corresponding to the vehicle.

4. The method according to claim 3, wherein determining the ground hazard information comprises:
identifying, by using at least one image recognition model on the basis of the ground image information acquired by the camera sensor, a ground hazard feature in the ground image information that is related to a path of a passenger entering or exiting the vehicle, wherein
the ground hazard feature comprises at least: a waterlogged area, a ground depression area with a depth exceeding a predetermined threshold, an icy area, a trash-covered area, a snow-covered area, or a curb higher than a door sill of the vehicle.

5. The method according to claim 4, wherein identifying the ground hazard feature in the ground image information that is related to the path of the passenger entering or exiting the vehicle further comprises:
using the at least one image recognition model to perform inference-based matching on the acquired ground hazard feature to determine potential ground hazard areas and associated confidence scores; and
in response to the confidence scores being higher than a predetermined threshold, identifying the potential ground hazard areas as ground hazard areas.

6. The method according to claim 2, wherein the lidar sensor is configured to: construct a three-dimensional (3D) point cloud model for the ground by emitting a laser beam and measuring a round-trip time of the laser beam; and
on the basis of a height change in the 3D point cloud model, identify a ground hazard feature, wherein
the lidar sensor comprises a frequency-modulated continuous-wave (FMCW)-based lidar and/or a light-section-based lidar.

7. The method according to claim 6, wherein on the basis of the height change in the 3D point cloud model, identifying the ground hazard feature comprises:
detecting a depth difference caused by a ground depression area, a ground elevation area, or a ground change.

8. The method according to claim 2, wherein the thermal imaging sensor is configured to: detect a thermal radiation feature in a temperature gradient change on the ground; and
on the basis of the thermal radiation feature, identify a ground hazard feature.

9. The method according to claim 2, wherein the polarization sensor is configured to: detect a polarization change in ground reflection; and
on the basis of a polarization feature in the polarization change, identify a ground hazard feature, wherein the polarization feature comprises ground reflectance or a ground texture change.

10. The method according to any one of claims 1 to 9, wherein on the basis of the detected ground hazard information, determining the parking location in the target parking area for the vehicle comprises:
on the basis of the identified ground hazard areas and the target parking area, generating a parking trajectory; and
enabling the vehicle to travel and park on the basis of the generated parking trajectory.

11. The method according to claim 10, wherein on the basis of the identified ground hazard areas and the target parking area, generating the parking trajectory comprises:
performing hazard rating on each of the identified ground hazard areas; and
selecting an area with a minimum hazard rating score as the parking location.

12. The method according to claim 11, further comprising:
in response to a hazard rating score of each of the ground hazard areas on the ground exceeding a hazard rating score threshold,
performing partial drying processing on a waterlogged area or a snow-covered area by using a ground drying assembly at the bottom of the vehicle; or
performing partial obstacle clearing processing on a trash-covered area or a snow-covered area on the ground by using a ground obstacle clearing assembly at the bottom of the vehicle.

13. An electronic device for parking a vehicle, comprising:
a processor; and
a memory, coupled to the processor and having instructions stored therein, wherein the instructions, when executed by the processor, cause the device to perform the method according to any one of claims 1 to 12.

14. A computer-readable storage medium, having computer-executable instructions stored thereon, wherein the computer-executable instructions, when executed, cause a computer to perform the method according to any one of claims 1 to 12.

15. A computer program product, physically stored on a non-volatile computer-readable medium and comprising machine-executable instructions, wherein the machine-executable instructions, when executed, cause a machine to perform the method according to any one of claims 1 to 12.
